# FASCICULE DE BREVET EUROPEEN

(11) **EP 0 607 068 B1**
(45) Date de publication et mention de la délivrance du brevet: **08.10.1997**
(21) Numéro de dépôt: 94400041.3
(22) Date de dépôt: 06.01.1994
(51) Int. Cl.: B23K 9/02, B23K 35/28

(54) **Procédé de soudage d'éléments en aluminium ou en alliage d'aluminium**
Verfahren zum Verschweissen von Teilen aus Aluminium oder einer Aluminiumlegierung
Procedure for the welding of elements made of aluminium or an aluminium alloy

(30) Priorité: 11.01.1993 FR 9300166
(43) Date de publication de la demande: 20.07.1994
(73) Titulaire: GEC ALSTHOM TRANSPORT SA, 75016 Paris (FR)
(72) Inventeur: Giraud, Remy, F-17300 Rochefort sur Mer (FR); Trapy, Joel, F-17290 Ardillieres Aigrefeuille d'Aunis (FR); Grasset, Philippe, F-79400 Saint Maixent l'Ecole (FR)
(74) Mandataire: Fournier, Michel

(56) Documents cités:
- DE-B- 1 955 632
- US-A- 2 812 419
- WELDING JOURNAL, vol.68, no.12, Décembre 1989, MIAMI, FL, US pages 63 - 64 H. C. CAMPBELL 'Root Pass Welding of Line Pipe without Backing'

## Description

La présente invention concerne un procédé de soudage avec apport de métal d'éléments entre eux, ces éléments étant en aluminium ou en alliage d'aluminium.

Le soudage d'éléments en aluminium (ou en alliage d'aluminium) impose la prise d'un certain nombre de précautions. Il est nécessaire que les parties à souder présentent un état de surface parfaitement propre. Ceci s'obtient par des opérations de dégraissage et de décapage mécanique. Pour souder entre eux des éléments en aluminium, on utilise souvent une pièce d'outillage, appelée latte ou saumon, chargée d'empêcher la soudure en fusion de couler. C'est en effet une propriété de l'aluminium en fusion que de couler facilement, ceci d'autant mieux que le soudage se fait avec apport du même métal.

La pièce d'outillage utilisée est en cuivre ou en acier inoxydable, de manière à pouvoir s'enlever facilement une fois la soudure réalisée. Cependant, lors de la fusion de l'aluminium, la surface de cette pièce en contact avec le métal fondu est attaquée et des parties du métal la composant se mélangent au cordon de soudure. Ceci provoque des inclusions de particules de cuivre ou d'acier qui amènent certains défauts: présence de criques, de fissures, manque d'homogénéité dans la soudure. Ces défauts altèrent la résistance de la liaison entre les éléments soudés.

Lorsqu'un élément se soude sur un autre en le croisant ou en aboutissant sur cet élément sans être dans son prolongement, il est nécessaire de prévoir un congé de raccordement entre les deux éléments pour consolider la liaison et améliorer la tenue en fatigue. Ce congé de raccordement est réalisé par plusieurs passes de soudure, le métal d'apport fournissant la matière nécessaire au congé. La propriété de l'aluminium liquide de couler facilement impose dans ce cas l'utilisation d'une latte pour effectuer la soudure.

L'invention apporte une solution satisfaisante au problème posé par le coulage du cordon de soudure en aluminium. Elle évite l'utilisation de pièces d'outillage en acier inoxydable ou en cuivre. Elle peut être utilisée pour souder des éléments mis bout à bout, mais elle est particulièrement bien adaptée au soudage d'éléments qui se croisent ou qui se rencontrent selon un angle sensiblement différent de 180° et où un congé de raccordement s'impose.

Le document DE-B-1 955 632 de l'état de la technique décrit un procédé conforme au préambule de la revendication 1.

L'invention a donc pour objet un procédé de soudage d'éléments à souder comprenant les étapes suivantes:
- préparation desdits éléments à souder,
- installation desdits éléments à souder et d'au moins une pièce d'assemblage à l'endroit de la soudure à effectuer,
- soudage des éléments à souder en incorporant à la soudure au moins une partie de la pièce d'assemblage,
   lesdits éléments à souder étant en aluminium ou en alliage d'aluminium et la pièce d'assemblage étant du même type de métal ou d'alliage que celui desdits éléments à souder,
   ledit procédé étant caractérisé par les étapes suivantes:
- lors de l'installation, les éléments à souder et la pièce d'assemblage, sont placés dans un même plan et la pièce d'assemblage est disposée entre lesdits éléments à souder et contre les faces latérales desdits éléments à souder.

Lorsque la soudure entre les éléments est destinée à former en outre un congé de raccordement entre ces éléments, la pièce d'assemblage est d'épaisseur inférieure à l'épaisseur de chaque élément et est installée dans l'angle que font les deux éléments entre eux de façon à supporter les passes de soudure destinées à former le congé.

L'étape d'installation peut être conduite de manière à permettre d'inclure la pièce d'assemblage dans l'espace angulaire entre les éléments pour l'intégrer au congé.

L'invention sera mieux comprise et d'autres avantages et particularités apparaîtront à la lecture de la description qui va suivre, donnée à titre d'exemple, accompagnée des dessins annexés parmi lesquels:
- la figure 1 illustre l'installation de deux éléments en aluminium et de pièces d'outillage en vue du soudage de ces éléments selon l'art connu,
- la figure 2 représente les deux éléments de la figure 1 soudés ensemble et leurs congés de raccordement,
- la figure 3 illustre l'installation de deux éléments en aluminium et de pièce d'assemblage en vue de réaliser le soudage des éléments selon l'invention,
- la figure 4 illustre l'installation de deux éléments en aluminium et d'une pièce d'assemblage en vue de réaliser le soudage bout à bout de deux éléments selon l'invention.

Avant de procéder au soudage d'éléments en aluminium, les éléments sont préparés selon les techniques connues de l'homme du métier. Les parties devant être soudées sont nettoyées, dégraissées et décapées mécaniquement. Certaines faces peuvent être biseautées pour permettre une pénétration de la soudure plus en profondeur. Cette opération de biseautage dépend de l'épaisseur des pièces à assembler et de leur forme.

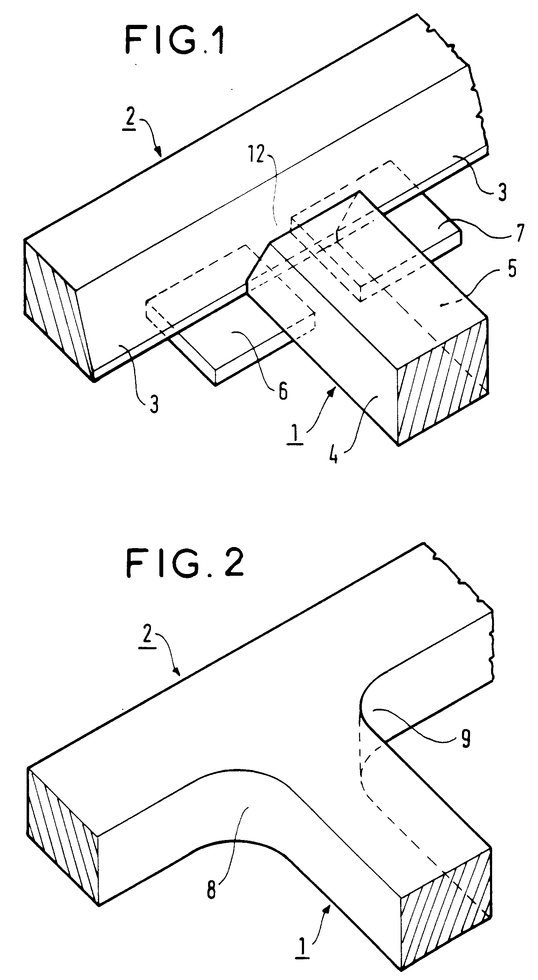

La figure 1 est représentative de l'installation de deux éléments en vue de leur soudage conformément aux dispositions de l'art antérieur. L'extrémité de l'élément 1 doit être soudée sur un côté de l'élément 2 et on désire former des congés de raccordement entre la face 3 de l'élément 2 et la face 4 de l'élément 1 d'une part, et entre la face 3 de l'élément 2 et la face 5 de l'élément 1 d'autre part. La face 3 de l'élément 2 et l'extrémité adjacente de l'élément 1 sont biseautées pour constituer le joint 12. Des lattes 6 et 7 sont disposées sous les éléments 1 et 2. Des pinces maintiennent les éléments et les lattes en place et on procède à la soudure. Celle-ci peut être réalisée selon les procédés TIG (Tungsten Inert Gas) ou MIG (Metal Inert Gas), au moyen d'une torche avec fil d'apport, le métal d'apport étant de même nature que celui des éléments à souder et le gaz étant par exemple de l'argon.

On effectue d'abord une première passe de soudure de manière à remplir le joint 12. On effectue ensuite plusieurs passes de soudure entre les faces 3 et 4 avec la latte 6 comme support, et entre les faces 5 et 3 avec la latte 7 comme support, jusqu'à combler les angles entre les pièces 1 et 2.

En desserrant les pinces, on détache facilement les lattes en cuivre ou en acier inoxydable. On effectue une dernière passe de soudure pour souder la quatrième arête de l'élément 1 sur l'élément 2.

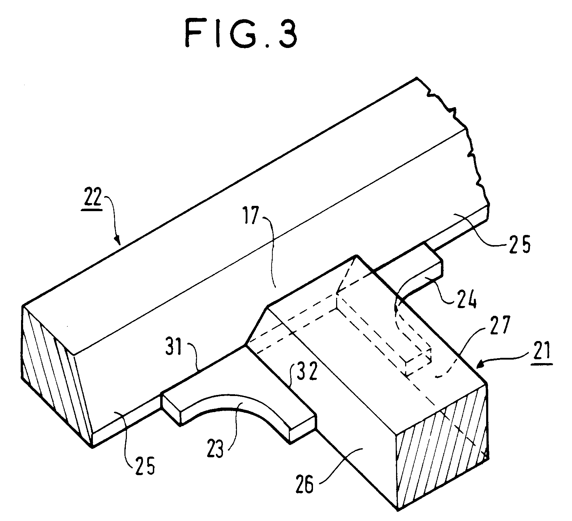

Une opération de meulage ou de fraisage est ensuite effectuée pour former des congés de forme régulière et pour araser les soudures. La figure 2 montre le résultat obtenu, les congés 8 et 9 consolidant l'assemblage des éléments 1 et 2.

Selon l'invention, les angles entre les éléments à souder sont pourvus de pièces d'assemblage. La figure 3 montre deux éléments 21 et 22 à assembler. La face 25 de l'élément 22 et l'extrémité adjacente de l'élément 21 sont biseautées pour constituer le joint 17. Dans chaque angle formé par la jonction des éléments 21 et 22, on a disposé une pièce d'assemblage ou gousset 23, 24.

L'ensemble est maintenu solidaire par des pinces non représentées.

Les goussets sont de même qualité que les pièces à assembler. Ils peuvent être préparés par des procédés de découpe rapide, suivant un angle identique à celui de l'assemblage. Leur découpage préfigure la forme future des congés.

Dans l'exemple représenté, les goussets 23 et 24 sont placés sur le même plan que les éléments à assembler.

Le soudage débute par la fixation des goussets. Il peut être réalisé selon les procédés TIG ou MIG au moyen d'une torche avec fil d'apport et sous argon. Pour le gousset 23, on soude le côté 31 sur la face 25 de l'élément 22 et le côté 32 sur la face 26 de l'élément 21. On procède de manière identique pour souder le gousset 24 sur les éléments 21 et 22. Une reprise de soudure est effectuée pour assurer la liaison des éléments 21 et 22 dans leur zone de contact. A cet effet, on remplit le joint 17.

On effectue ensuite une série de passes de soudure dans les angles formés par la jonction des éléments 21 et 22, au-dessus des goussets 23 et 24. On réalise aussi une passe de soudage sur la face inférieure de l'ensemble.

On procède enfin à une opération de meulage ou de fraisage pour obtenir les congés désirés et pour araser les cordons de soudure.

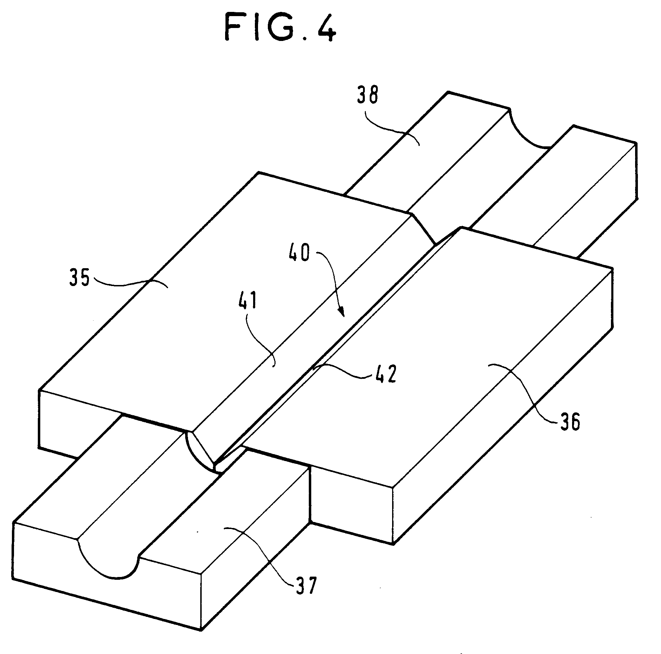

La figure 4 illustre un autre aspect de l'invention. Il s'agit du cas où l'on doit souder deux éléments bout à bout. Les faces 41 de l'élément 35 et 42 de l'élément 36 sont biseautées et aboutées pour créer un joint 40. Des pièces d'assemblage 37 et 38 de même nature que les éléments 35 et 36 sont mises en place contre les éléments 35 et 36 et à chaque extrémité du joint 40. L'ensemble des pièces 35, 36, 37 et 38 est rendu solidaire par des pinces non représentées. Comme précédemment, on soude les pièces 37 et 38 aux éléments 35 et 36. Une passe de soudure permet de souder les zones de contact accessibles entre les éléments 35 et 36. On comble par plusieurs passes de soudure l'espace subsistant et on obtient ainsi une soudure homogène en début et en fin de cordon.

Par cette méthode, on évite tout inclusion de métal étranger. La soudure obtenue est totalement homogène et il ne se produit aucune crique ou fissure liée aux reprises. On obtient des liaisons avec congés de raccordement de manière nettement plus rapide que précédemment.

Le procédé selon l'invention permet d'obtenir des liaisons particulièrement résistantes entre éléments en aluminium ou en alliage d'aluminium. Il s'applique alors d'autant mieux à la réalisation de caisses de véhicules ferroviaires pour lesquelles on désire bénéficier de la légèreté de l'aluminium et conserver une solidité suffisante à l'ossature des caisses.

## Revendications

1. Procédé de soudage d'éléments à souder (21, 22; 35, 36) comprenant les étapes suivantes:
- préparation desdits éléments à souder (21, 22; 35, 36),
- installation desdits éléments à souder (21, 22; 35, 36) et d'au moins une pièce d'assemblage (23, 24; 37, 38) à l'endroit de la soudure à effectuer,
- soudage des éléments à souder (21, 22; 35, 36) en incorporant à la soudure au moins une partie de la pièce d'assemblage (23, 24; 37, 38),
lesdits éléments à souder (21, 22; 35, 36) étant en aluminium ou en alliage d'aluminium et la pièce d'assemblage (23, 24; 37, 38) étant du même type de métal ou d'alliage que celui desdits éléments à souder,
ledit procédé étant caractérisé par les étapes suivantes:
- lors de l'installation, les éléments à souder (21, 22; 35, 36) et la pièce d'assemblage (23, 24; 37, 38) sont placés dans un même plan et la pièce d'assemblage (23, 24; 37, 38) est disposée entre lesdits éléments à souder et contre les faces latérales desdits éléments à souder (21, 22; 35, 36).

2. Procédé de soudage selon la revendication 1, caractérisé en ce que, la soudure entre lesdits éléments à souder (21, 22; 35, 36) étant destinée à former en outre un congé de raccordement entre ces éléments, la pièce d'assemblage (23, 24) est d'épaisseur inférieure à l'épaisseur de chaque élément à souder et est installée dans l'angle que font les deux éléments à souder entre eux de façon à supporter les passes de soudure destinées à former le congé.

3. Procédé de soudage selon la revendication 2, caractérisé en ce que l'étape d'installation est conduite de manière à permettre d'inclure la pièce d'assemblage (23, 24; 37, 38) dans un espace angulaire entre lesdits éléments à souder (21, 22; 35, 36) pour l'intégrer au congé.

## Claims

1. A method of welding parts (21, 22; 35, 36) to be welded, the method comprising the following steps:
• preparing said parts (21, 22; 35, 36) to be welded,
• installing said parts (21, 22; 35, 36) to be welded and at least one joining piece (23, 24; 37, 38) at the location where the welding is to be performed,
• welding the parts (21, 22; 35, 36) to be welded by incorporating in the weld at least a portion of the joining piece (23, 24; 37, 38),
said parts (21, 22; 35, 36) to be welded being made of aluminum or aluminum alloy and the joining piece (23, 24; 37, 38) being of the same type of metal or alloy as said parts to be welded,
said method being characterized by the following step:
• during installation, the parts (21, 22; 35, 36) to be welded and the joining piece (23, 24; 37, 38) are placed in the same plane and the joining piece (23, 24; 37, 38) is disposed between said parts to be welded and against the side faces of said parts to be welded (21, 22; 35, 36).

2. A method of welding according to claim 1, characterized in that where the weld between said parts (21, 22; 35, 36) to be welded is also intended to form a connecting fillet between those parts, the joining piece (23, 24; 37, 38) has a thickness less than the thickness of each part to be welded and is placed in the angle formed between the two parts to be welded so as to withstand the weld passes which are intended to form the fillet.

3. A method of welding according to claim 2, characterized in that the installation step is carried out in such a way as to allow the joining piece (23, 24; 37, 38) to be included in an angular space between said parts (21, 22; 35, 36) to be welded so that it may be integrated with the fillet.

## Patentansprüche

1. Verfahren zum Verschweißen von Elementen (21, 22; 35, 36) mit folgenden Verfahrensschritten
- Vorbereitung der zu verschweißenden Elemente (21, 22; 35, 36),
- richtige Anordnung der zu verschweißenden Elemente (21, 22; 35, 36) und mindestens eines Montagebauteils (23, 24; 37, 38) an der Stelle, an der die Schweißung durchgeführt werden soll,
- Verschweißen der Elemente (21, 22; 35, 36) unter Einschluß mindestens eines Bereichs des Montagebauteils (23, 24; 37, 38), wobei die zu verschweißenden Elemente (21, 22; 35, 36) aus Aluminium oder einer Aluminiumlegierung sind und das Montagebauteil (23, 24; 37, 38) aus der gleichen Art Metall oder Legierung wie die zu verschweißenden Elemente ist,
dadurch gekennzeichnet, daß noch folgende Schritte durchgeführt werden:
- bei der richtigen Anordnung werden die zu verschweißenden Elemente (21, 22; 35, 36) und das Montagebauteil (23, 24; 37, 38) in einer gemeinsamen Ebene angeordnet, und das Montagebauteil (23, 24; 37, 38) wird zwischen die zu verschweißenden Elemente und gegen die Seitenflächen der zu verschweißenden Elemente (21, 22; 35, 36) angelegt.

2. Schweißverfahren nach Anspruch 1, dadurch gekennzeichnet, daß, wenn die Verschweißung zwischen den Elementen (21, 22; 35, 36) unter Bildung einer Anschlußkehle zwischen diesen Elementen erfolgen soll, das Montagebauteil (23, 24) eine geringere Dicke als jedes der zu verschweißenden Elemente besitzt und in dem Winkel angeordnet wird, den die beiden zu verschweißenden Elemente zwischen sich bilden, so daß es die Schweißzyklen zur Bildung der Kehle heil übersteht.

3. Schweißverfahren nach Anspruch 1, dadurch gekennzeichnet, daß der Verfahrensschritt der Anordnung so gestaltet ist, daß das Montagebauteil (23, 24; 37, 38) in einen Winkelbereich zwischen den zu verschweißenden Elementen (21, 22; 35, 36) eingefügt wird, um es in die Kehle zu integrieren.
